# EUROPEAN PATENT APPLICATION

(11) **EP 3 330 935 A1**
(43) Date of publication of application: **06.06.2018**
(21) Application number: 17204877.9
(22) Date of filing: 01.12.2017
(51) Int. Cl.: G08B 13/196, G03B 17/02, H04N 5/225, G08B 15/00

(54) **CAMERA APPARATUS WITH VARIABLE LIGHT OF RING-LIKE STRUCTURE**

(30) Priority: 01.12.2016 TW 105139677
(71) Applicant: UMBO CV Inc., 11491 Taipei City (TW)
(72) Inventor: Chen, Chao-Yi, 11491 Taipei (TW); Ko, Chih-Wen, 11491 Taipei (TW)
(74) Representative: Lucke, Andreas

(57) **Abstract**

The present invention provides a camera apparatus, comprising: a housing having an interior space; a camera lens disposed in the interior space of the housing; and a variable light encircling an outer surface of the housing.

## Description

### BACKGROUND OF THE INVENTION

### FIELD OF THE INVENTION

The present invention relates to a camera apparatus, and more particularly, to a camera apparatus with a breathing light of a ring-like structure.

### DESCRIPTION OF THE PRIOR ART

In today's society, surveillance cameras are widely installed and used in various places, including banks, roads, schools, and private residences, to record images around these places 24 hours a day, generally for the purpose of crime prevention and evidence collection through technological means. In addition, many existing surveillance cameras integrate further with the internet, servers, or storage devices and co-operate with image editing or managing applications to form a security surveillance network system.

A conventional surveillance camera may come with a status indicator light to show the operating status of the camera. For example, a red light may indicate that the camera is down or out of power, and a white light may indicate normal operation of the camera. However, a conventional status indicator light configured on a surveillance camera is usually quite small and not located at a conspicuous position; therefore, when the status indicator light of a surveillance camera indicates a malfunction in the camera, it is not easy for the user to find out and repair of the camera may be delayed.

Moreover, a conventional surveillance camera is usually installed at a location that is less likely to be discovered by offenders or passersby in order to have a better coverage of images. As offenders may not be aware of the existence of a camera, the purpose of preventing crimes by installing a surveillance camera can be hard to achieve, particularly at night. For example, if an offender tries to find out whether a surveillance camera is nearby before committing an offense, poor vision at night due to insufficient light would lead the offender to wrongly believe that there is no surveillance camera at the spot and proceed with the offense. In other words, although installing surveillance cameras is originally meant to prevent crimes beforehand and to collect criminal evidence afterwards, the current development of surveillance camera technologies has been focusing more on evidence collection and less on intimidating criminals, which is a long-existing problem with conventional cameras that needs to be addressed.

### SUMMARY OF THE INVENTION

In view of the above, to solve the foregoing problems related to conventional surveillance cameras, including that "indicator lights are hard to observe" and that "preventing crimes is hard to achieve because offenders cannot be intimidated," the present invention provides a camera apparatus, comprising: a housing having an interior space; a camera lens disposed in the interior space of the housing; and a breathing light encircling an outer surface of the housing. The camera apparatus according to the present invention comprises a breathing light that encircles the housing of the camera apparatus, and therefore, the user can observe the camera apparatus from any angle and will easily notice when the camera apparatus is out of order. Moreover, in addition to intimidating offenders by warning them the existence of a camera apparatus, the breathing light of a ring-like structure arranged on the camera apparatus can attract passersby or the offenders to look at the camera apparatus, and thereby improve the accuracy of facial recognition.

Additionally, the breathing light of the camera apparatus according to the present invention can display a plurality of colors that correspond to a plurality of operating statuses of the camera apparatus, respectively.

Additionally, in the camera apparatus according to the present invention, the breathing light is formed by causing at least one light source to emit light that passes through a light-transmittable area of the housing.

Additionally, in the camera apparatus according to the present invention, the at least one light source is formed of light emitting diodes.

Additionally, the camera apparatus according to the present invention further comprises a main circuit board, and the at least one light source is disposed thereon.

Additionally, in the camera apparatus according to the present invention, the housing comprises a mounting base and a main cover, wherein the main cover is semicircular in shape.

Additionally, the camera apparatus according to the present invention further comprises a lens angle adjustment member used for adjusting a shooting angle of the camera lens.

Additionally, the camera apparatus according to the present invention further comprises a lens cover disposed between the main cover and the camera lens.

The detailed description of embodiments as follows will illustrate the specific features and advantages of the present invention. The following description contains the knowledge that suffices to enable those skilled in the art to understand and implement the present invention. Based on the content, appended claims and drawings disclosed in this specification, those skilled in the art can easily grasp the objectives and advantages of the present invention.

### BRIEF DESCRIPTION OF THE DRAWINGS

Fig. 1 is an exploded schematic perspective view showing a camera apparatus according to an embodiment of the present invention; and
Fig. 2 is a schematic perspective view showing the camera apparatus in an assembled state according to an embodiment of the present invention.

### DETAILED DESCRIPTION OF THE PREFERRED EMBODIMENTS

The following description will illustrate the exemplary embodiments of the present invention. It should be noted that the embodiments described are for illustration purposes and are not intended to limit the scope of the invention to specific features, structures, or nature contained in these embodiments. The scope of the invention should, however, be determined with reference to the appended claims. Besides, the referenced drawings in the description do not show all the unnecessary features of the present invention, and the elements may be shown in a simplified, schematic view. Dimensions of the elements in the drawings may be enlarged or disproportionate to their actual sizes for the purpose of illustration. Despite the simplifications described above and regardless of whether relevant features are illustrated comprehensively, it should be appreciated that the description contains the knowledge based on which various other embodiments of the invention with related features, structure or nature can be implemented by those skilled in the art.

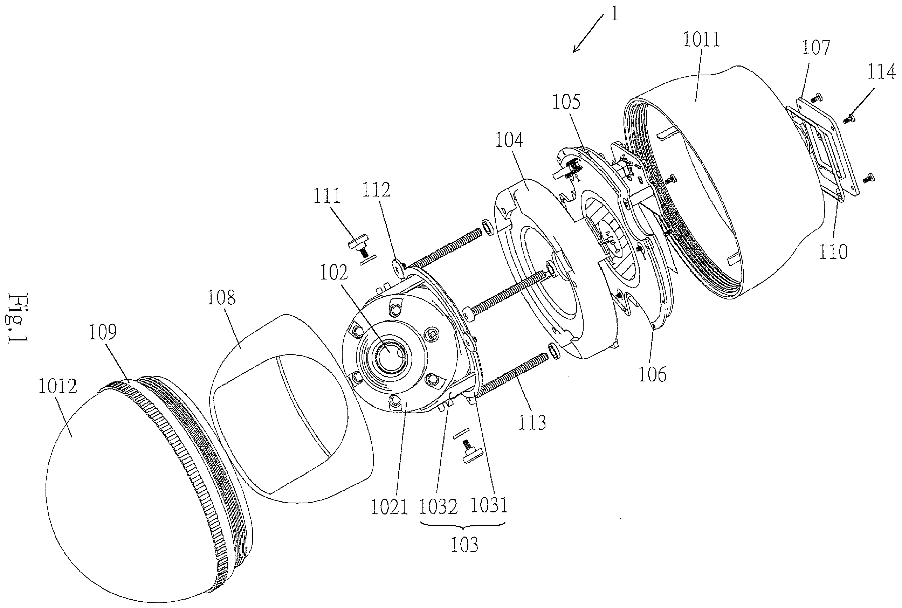

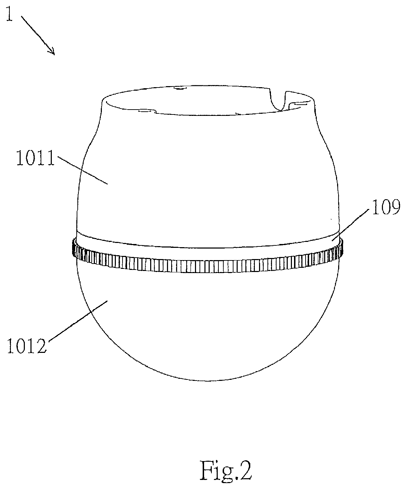

Fig. 1 is an exploded schematic perspective view showing a camera apparatus according to a preferred embodiment of the present invention, and Fig. 2 is a schematic perspective view showing the camera apparatus in an assembled state. The camera apparatus 1 comprises a camera lens 102 and a housing. The housing comprises a mounting base 1011 and a main cover 1012 which is semicircular in shape, and the two parts can be joined together or separated apart by means of mating threads. When the mounting base 1011 and the main cover 1012 are joined, the housing will contain an interior space for accommodating the camera lens 102.

The camera lens 102 comprises a camera lens securing base 1021, which is fastened securely to a lens angle adjustment member 103 by means of a first screw set 111. Moreover, the lens angle adjustment member 103 is clamped to a securing member 104 by means of a second screw set 112. The camera apparatus 1 further comprises a main circuit board 105. When the securing member 104 of the camera apparatus 1 is fastened to the mounting base 1011 by means of a third screw set 113, the main circuit board 105 will be secured and accommodated in the mounting base 1011 accordingly.

The lens angle adjustment member 103 comprises a lens rotation adjustment element 1031 and a lens tilt adjustment element 1032. Although the lens angle adjustment member 103 is clamped to the securing member 104 by means of the second screw set 112, the user can still rotate the lens rotation adjustment element 1031 and thereby rotate the camera lens 102. Also, the user can adjust the tilting angle of the camera lens 102 by making adjustments with respect to the lens tilt adjustment element 1032.

In another preferred embodiment of the present invention, the camera apparatus 1 comprises a memory card (not shown) for storing images captured by it. The camera apparatus 1 further comprises a memory card protective cover 107 and a waterproof rubber member 110 for protecting the memory card. The memory card protective cover 107 and the waterproof rubber member 110 are sealed and covered on the bottom of the mounting base 1011, around the area where the memory card is located. In a preferred embodiment of the invention, the camera apparatus 1 comprises a lens cover 108 disposed between the main cover 1012 and the camera lens 102, so that only the camera lens 102 is exposed while other interior components (such as the main circuit board 105) of the camera apparatus 1 are covered.

Please refer to Fig. 1 and Fig. 2. As shown in the drawings, a plurality of light sources 106 are disposed on the edge of the main circuit board 105 in the camera apparatus 1. When the mounting base 1011 and the main cover are joined, light emitted by the plurality of light sources 106 passes through a light-transmittable area of the main cover 1012, and a breathing light 109 is thus formed; the light-transmittable area is where the breathing light 109 functions. Accordingly, the camera apparatus 1 comprises a breathing light 109 of a ring-like structure; the breathing light 109 encircles the outer surface of the main cover 1012.

In a preferred embodiment of the invention, the light sources 106 may be formed of, but not limited to, LED lights, electroluminescent (EL) lamps, plasma tube lamps or fluorescent lamps, and the light sources 106 can display a plurality of colors that correspond to a plurality of operating statuses of the camera apparatus, respectively. For example (but not limited to), a white light indicates the camera apparatus is "on line"; a green light indicates "connecting"; a red light indicates "server error"; and a yellow light indicates "NTP (Network Time Protocol) error."

To conclude, with the breathing light 109 of a ring-like structure, the camera apparatus 1 according to the present invention can make its existence noticed by passersby and also allow the user to easily check the operating status thereof. As such, the camera apparatus according to this invention is able to solve technical problems with prior art devices, such as "indicator lights are hard to observe" and "preventing crimes is hard to achieve because offenders cannot be intimidated." In sum, the camera apparatus according to this invention is able to achieve the following results: malfunctions with the apparatus can be easily discovered; offenders can be intimidated; and the accuracy of facial recognition can be improved as well.

Preferred embodiments of the present invention have been illustrated through the above description and the accompanying drawings. All the features disclosed in the description may be used in combination with other methods, and each feature disclosed herein may be optionally replaced by another feature which serves an identical, equivalent or similar purpose. Hence, except for the features that are particularly obvious, each feature disclosed in the description merely serves as one example from equivalent or similar features.

Various alterations and modifications to the invention will become apparent to those skilled in the art after reading the above description of the preferred embodiments; such alterations and modifications are intended to be included within the spirit and scope of the present invention. The scope of the invention should not be limited to the exemplary embodiments described herein.

### DESCRIPTION OF REFERENCE SIGNS

1 : Camera apparatus
1011 : Mounting base
1012 : Main cover
102 : Camera lens
1021 : Camera lens securing base
103 : Lens angle adjustment member
1031 : Lens rotation adjustment element
1032 : Lens tilt adjustment element
104 : Securing member
105 : Main circuit board
106 : Light sources
107 : Memory card protective cover
108 : Lens cover
109 : Breathing light
110 : Waterproof rubber member
111 : First screw set
112 : Second screw set
113 : Third screw set
114 : Fourth screw set

## Claims

1. A camera apparatus, comprising:
a housing having an interior space;
a camera lens disposed in the interior space of the housing; and
a breathing light encircling an outer surface of the housing.

2. The camera apparatus of claim 1, wherein the breathing light is of a ring-like structure.

3. The camera apparatus of claim 1, wherein the breathing light can display a plurality of colors that correspond to a plurality of operating statuses of the camera apparatus, respectively.

4. The camera apparatus of claim 1, wherein the breathing light is formed by causing at least one light source to emit light that passes through a light-transmittable area of the housing.

5. The camera apparatus of claim 4, wherein the at least one light source is formed of light-emitting diodes.

6. The camera apparatus of claim 4, further comprising a main circuit board, wherein the at least one light source is disposed on the main circuit board.

7. The camera apparatus of claim 1, wherein the housing comprises a mounting base and a main cover, the main cover being semicircular in shape.

8. The camera apparatus of claim 1, further comprising a lens angle adjustment member used for adjusting a shooting angle of the camera lens.

9. The camera apparatus of claim 7, further comprising a lens cover disposed between the main cover and the camera lens.
